# EUROPÄISCHE PATENTANMELDUNG

(11) **EP 1 973 215 A1**
(43) Veröffentlichungstag der Anmeldung: **24.09.2008**
(21) Anmeldenummer: 08005203.8
(22) Anmeldetag: 19.03.2008
(51) Int. Cl.: H02J 7/00

(54) **Vorrichtung zur alternativen Energieversorgung elektrischer Kleingeräte**

(30) Priorität: 20.03.2007 DE 102007013308
(71) Anmelder: L+P holding GmbH, 80939 München (DE)
(72) Erfinder: Vohrer, Ulrich, 80995 München (DE)
(74) Vertreter: Samson & Partner

(57) **Zusammenfassung**

Eine Vorrichtung zur alternativen Energieversorgung elektrischer Kleingeräte mit elektrischer Energie verschiedener Versorgungssysteme zum direkten Betrieb und/oder zur Ladung eines Akkumulators (6) umfasst einen USB-Steckverbinder (1) und mindestens einen weiteren Steckverbinder (2;3) an Versorgungsanschlüssen, einen Spannungswandler in einem Gehäuse (4) und einen Kleingerätesteckverbinder (5) an einem Verbraucheranschluss.

## Beschreibung

### GEBIET DER ERFINDUNG

Die Erfindung beschäftigt sich mit einer Vorrichtung zur alternativen Energieversorgung elektrischer Kleingeräte mit elektrischer Energie aus verschiedenartigen Versorgungssystemen zum direkten Betrieb und/oder zur Ladung eines Geräteakkumulators bzw. Akkus des Gerätes.

### HINTERGRUND DER ERFINDUNG

Elektrische Kleingeräte werden für gewöhnlich mit niedrigen Spannungen von zum Beispiel 2V bis 10V betrieben. Zur Versorgung und Betrieb eines Kleingeräts oder dessen Akkumulators dient für gewöhnlich ein öffentliches Verbundnetz, d.h. ein elektrisches Verbundnetz zur Versorgung der Bevölkerung eines Landes mit elektrischer Energie. Da das Verbundnetz mit viel höheren Spannungen betrieben wird als ein Kleingerät, zum Beispiel 100V bis 240V, werden Vorrichtungen benötigt, die die Spannung des Verbundnetzes den Anforderungen des Kleingerätes entsprechend transformieren. Diese Vorrichtungen zur Energieversorgung bzw. -übertragung werden gewöhnlich als "Netzteil" oder "Ladegerät" bezeichnet.

Mit der Einführung ortsunabhängiger Bürogeräte, wie Notebooks oder Mobiltelefone, haben sich auch die Lebens- und Arbeitsgewohnheiten ihrer Benutzer geändert. Durch diese neuen Geräte kann heute auch mehr unterwegs gearbeitet werden, und das Erfordernis eines festen Arbeitsplatzes schwindet. Dadurch kann der Benutzer mehr Arbeitszeit unterwegs verbringen ohne an Arbeitsvermögen zu verlieren, wodurch er auch mehr Zeit außerhalb der Arbeit auf Reisen verbringt. Daher ist es wünschenswert, dass elektrische Kleingeräte, wie sie z. B. für Körperhygiene benötigt werden, z.B. ein elektrischer Rasierapparat, auch unterwegs in jeder Situation betrieben oder aufgeladen werden können. Viele öffentliche Verkehrsmittel wie Züge oder Flugzeuge bieten bereits Anschlussmöglichkeiten, die mit den gleichen Netzteilen genutzt werden können, wie sie das Verbundnetz erfordert. Auch wird bereits über Anschlusssysteme diskutiert, die Reisende im Flugzeug am Sitzplatz mit elektrischer Energie versorgen sollen.

In US 6,301,792 wird ein Beispiel eines elektrischen Rasierapparates offenbart, der am Bordnetz in einem Fahrzeug aufgeladen werden kann.

In US 2,238,696 wird ein weiteres Beispiel eins elektrischen Rasierapparates offenbart, der sowohl am Bordnetz verschiedener Fahrzeuge als auch am öffentlichen Verbundnetz betrieben werden kann.

In US 6,614,206 ist ein Beispiel einer elektronischen Ladevorrichtung offenbart, die sowohl einen USB-Computeranschluss als auch ein Energieverbundnetzanschluss zur Versorgung elektrischer Kleingeräte über USB-Steckplätze verwendet und gleichzeitig als Kommunikationsnetzknoten dienen kann. Der Universal Serial Bus (USB) ist ein serielles Bussystem zur Verbindung eines Computers mit externen Geräten.

### KURZFASSUNG DER ERFINDUNG

Die Erfindung möchte die Flexibilität der Energieversorgung elektrischer Kleingeräte weiter verbessern.

Dafür stellt die Erfindung eine Vorrichtung zur alternativen Energieversorgung elektrischer Kleingeräte mit elektrischer Energie verschiedener Versorgungssysteme zum direkten Betrieb und/oder zur Ladung des Akkus von elektrischen Kleingeräten bereit. Die Vorrichtung umfasst einen Verbraucheranschluss, zum Anschluss an ein elektrisches Kleingerät; und mindestens zwei Versorgungsanschlüsse, die einem ersten bzw. mindestens einem zweiten Versorgungssystem zugeordnet sind, wobei einer der Versorgungsanschlüsse als USB-Versorgungsanschluss ausgebildet ist.

Zusätzliche Aspekte der Erfindung und Ausführungsbeispiele ergeben sich aus den abhängigen Ansprüchen, der nachfolgenden Beschreibung und der beigefügten Zeichnung.

### KURZBESCHREIBUNG DER ZEICHNUNG

Im folgenden werden bevorzugte Ausführungen der Erfindung anhand der beigefügten Zeichnung beispielhaft beschrieben. Daraus ergeben sich weitere Vorteile und Merkmale der Erfindung. In der Zeichnung zeigen:
- Fig. 1: ein Ausführungsbeispiel einer Vorrichtung zur Energieversorgung elektrischer Kleingeräte mit einem USB-Steckverbinder, einem Bordspannungssteckverbinder und einem Kleingerätesteckverbinder;
- Fig. 2: ein weiteres Ausführungsbeispiel einer Vorrichtung zur Energieversorgung elektrischer Kleingeräte mit einem USB-Steckverbinder, einem Verbundnetzsteckverbinder und einem Kleingerätesteckverbinder;
- Fig. 3: ein weiteres Ausführungsbeispiel einer Vorrichtung zur Energieversorgung elektrischer Kleingeräte mit einem USB-Steckverbinder, einem Bordspannungssteckverbinder, einem Verbundnetzsteckverbinder und einem Kleingerätesteckverbinder;

In der Zeichnung beziehen sich gleiche Bezugszeichen auf gleiche Teile. Die Zeichnung ist nicht unbedingt maßstabsgetreu, Beachtung fand die Illustrierung des Prinzips der Erfindung.

### BESCHREIBUNG BEVORZUGTER AUSFÜHRUNGSFORMEN

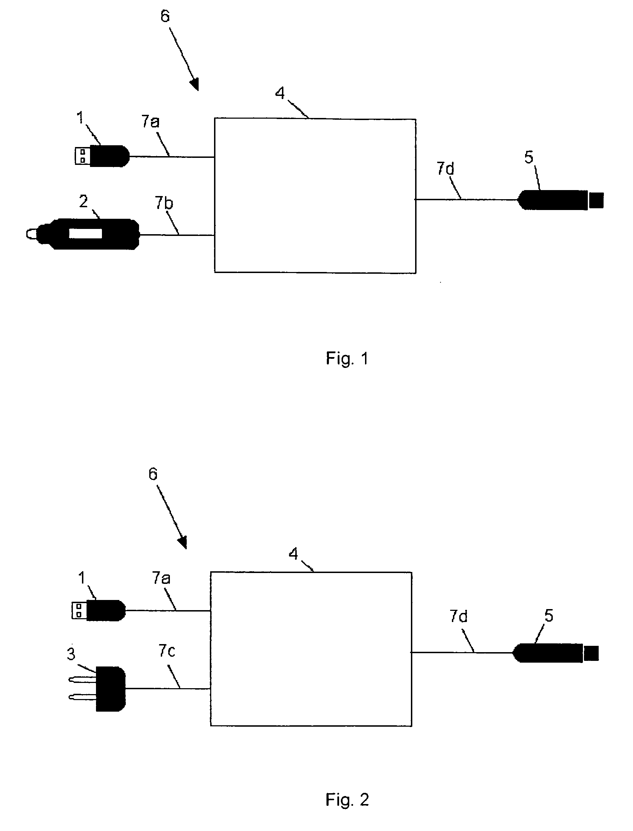

Fig. 1 veranschaulicht ein erstes Ausführungsbeispiel einer Vorrichtung zur Energieversorgung elektrischer Kleingeräte mit einem USB-Steckverbinder, einem Bordspannungssteckverbinder und einem Kleingerätesteckverbinder. Vor einer detaillierten Beschreibung der in Fig. 1 gezeigten Vorrichtung folgen zunächst einige allgemeine Erläuterungen zu den Ausführungsbeispielen

Nach einem Ausführungsbeispiel betrifft die Erfindung eine Vorrichtung zur Energieversorgung bzw. Energieübertragung von einer Energiequelle an ein elektrisches Kleingerät, wobei eine Mehrzahl von Steckverbindern als Versorgungsanschlüsse an der Vorrichtung vorhanden sind und jeder Steckverbinder einer unterschiedlichen Anschlussspezifikation zugeordnet ist. Dabei ist mindestens ein Steckverbinder ein USB-Steckverbinder. Am Verbraucheranschluss befindet sich bevorzugt ein Kleingerätesteckverbinder für ein elektrisches Kleingerät.

Nach einem weiteren Ausführungsbeispiel betrifft die Erfindung eine Vorrichtung zur Energieversorgung elektrischer Kleingeräte, die verschiedene und/oder gleiche Spannungen an den Versorgungsanschlüssen in eine bestimmte Spannung am Verbraucheranschluss wandelt. Dabei genügt mindestens ein Versorgungsanschluss den Spannungs- und Leistungsnormen der USB-Schnittstellen-Spezifikation und ein anderer der einer Fahrzeug-Bordspannung. In einer Ausführung sind die benötigten elektrischen Baugruppen parallel eingebaut, wobei sie elektrisch voneinander soweit getrennt sind, dass sie nur einen gemeinsamen Verbraucheranschluss nutzen. In einer anderen Ausführung werden für gleiche Funktionen die selben Bauelemente verwendet. In einer weiteren Ausführung werden für alle Funktionen die selben Bauelemente verwendet, die ggf. unterschiedlich beschaltet sind.

Sofern der Nutzer in einem Auto oder LKW unterwegs ist, bietet sich die Buchse des Zigarettenanzünders oder eine Bordspannungssteckdose, die über ein 12V bzw. 24V Bordnetz betrieben wird, als Versorgungsquelle an. Wenn dies nicht der Fall ist, ist ein USB-Steckplatz an einem Notebook oder Computer eine mögliche Versorgungsquelle. USB steht für "Universal Serial Bus" und bezeichnet ein serielles Bussystem zum Datentransfer zwischen einem Computer und externen Geräten. Um externe Geräte auch mit Energie versorgen zu können, sind neben den Datenleitungen auch mindestens eine Versorgungsleitung vorhanden. Beispielsweise umfasst ein USB-Anschluß vier Kontakte, zwei davon übertragen die Daten und die anderen beiden Kontakte versorgen das angeschlossene Gerät mit einer Spannung von z.B. 5V. Der USB-Spezifikation entsprechende Geräte könne bis zu 100 mA oder 500 mA aus dem USB-Anschluß beziehen, abhängig davon wie viel die Quelle liefern kann, an welche sie angeschlossen sind. Elektrische Kleingeräte mit einer Leistung von mindestens bis zu 2,5 W können also über die USB-Verbindung versorgt werden oder es kann ein Akku des Kleingerätes aufgeladen werden. Für Reisende auf internationalen Strecken hat ein USB-Versorgungsanschluß den Vorteil, weiter verbreitet zu sein als die benötigte Steckdose zum Verbundnetz. Da häufig nicht von vornherein absehbar ist, welche Quellen sich bieten werden, empfiehlt es sich, sich auf mehrere mögliche Versorgungsnetze als Quellen einzustellen, um gegebenenfalls anpassungsfähig sein zu können. Dazu muss man bisher für jedes der Versorgungsnetze ein Netzteil bereithalten. Da Netzteile ähnliche Abmessungen haben wie die Kleingeräte, die sie versorgen, vervielfacht sich der Platzbedarf der Kleingeräte mit der Anzahl möglicher Versorgungsnetze. Zudem darf der Reisende keines der Netzteile vergessen. An dieser Stelle schafft die Erfindung Abhilfe.

### Nun zurück zur Detailbeschreibung von Fig.1:

In Fig. 1 ist ein erstes Ausführungsbeispiel einer Vorrichtung zur Energieversorgung elektrischer Kleingeräte 6 dargestellt, bei dem sich an der Versorgungsseite ein USB-Anschluß mit einem Steckverbinder 1 und ein Bordspannungsanschluß mit einem Bordspannungssteckverbinder 2, d.h. ein Steckverbinder für eine Bordspannungssteckdose eines Bordnetzes oder für einen Zigarettenanzünder, befindet. Dabei geht von jedem der Steckverbinder 1,2 jeweils ein Kabel 7a,7b zu einem Gehäuse 4 der Vorrichtung. Es ist alternativ auch die Ausgestaltung als Kombinations-Steckverbinder denkbar, an dem sich sowohl ein USB-Aufsatz als auch ein Bordspannungs-Aufsatz befindet, und von dem nur ein einzelnes Kabel zum Gehäuse 4 führt. Genauso ist eine Ausführung denkbar, bei der einer der beiden Steckverbinder 1,2 oder beide Steckverbinder direkt am Gehäuse 4 der Vorrichtung sitzen, ohne dass Steckverbinder und Gehäuse durch ein Kabel verbunden werden müssen. Weitere Bauweisen sind denkbar, jedoch ist die genaue Anordnung und Verkabelung für eine erfindungsgemäße Ausführung der Vorrichtung nicht von Bedeutung.

An der Verbraucherseite der Vorrichtung ist ein Verbraucheranschluss 5, 7d, zum Anschluss an das elektrische Kleingerät vorhanden. Als Verbraucheranschluss dient bevorzugt ein Kleingerätesteckverbinder 5 oder ein in gleicher Weise verwendbarer Steckverbinder. Der Kleingerätesteckverbinder 5 ist, wie in Fig. 1 dargestellt, über ein Kabel 7d mit dem Gehäuse 4 verbunden, kann aber auch unmittelbar am Gehäuse 4 angebracht sein. Des weiteren sind Ausführungsformen der Vorrichtung zur Energieversorgung elektrischer Kleingeräte 6 denkbar, bei denen das Kleingerät in einer Halterung lagern kann, welche über Ladekontaktierungen als Verbraucheranschluss verfügt.

Im Gehäuse 4 befindet sich ein (nicht gezeigter) Spannungswandler, der eine Versorgungsspannung auf eine Verbraucherspannung umspannt. Zur Spannungswandlung wird die Versorgungsspannung beispielsweise "zerhackt" und an einen Transformator angelegt. An einer Sekundärseite des Transformators wird die Verbraucherspannung abgenommen, gleichgerichtet und geglättet. Wird der USB-Steckverbinder 1 für die Bereitstellung der Energie genutzt, liegt dort über einen Computer eine Spannung von ungefähr 4V bis ungefähr 6V an. Bevorzugt beträgt die Spannung ungefähr 5V. Wird der Bordspannungssteckverbinder 2 genutzt, liegt dort eine Gleichspannung von ungefähr 4V bis ungefähr 60V an. In einer bevorzugten Ausführung beträgt die Spannung von ungefähr 12V bis ungefähr 28V. Am Verbraucheranschluss kann im Betrieb eine elektrische Gleichspannung von ungefähr 2V bis ungefähr 60V anliegen. Bevorzugt liegt die Spannung zwischen ungefähr 4,5V und ungefähr 4,8V. Die Spannungsangaben bezeichnen mittlere Spannungen, bei denen Spannungseinbrüche und/oder -spitzen nicht berücksichtigt werden. Der Bordspannungssteckverbinder 2 steht exemplarisch für eine Vielzahl von Netzanschlüssen wie sie unter anderem in Fahrzeugen genutzt werden können.

Fig. 2 zeigt ein weiteres Ausführungsbeispiel einer Vorrichtung zur Energieversorgung elektrischer Kleingeräte 6 mit einem USB-Steckverbinder 1 und einem Verbundnetzsteckverbinder 3, d.h. ein Steckverbinder für ein Verbundnetz, an den Versorgungsanschlüssen und dem Kleingerätesteckverbinder 5 am Verbraucheranschluss. Die Steckverbinder 1,3 sind mit dem Gehäuse 4 über Kabel 7a,c verbunden, wobei auch hier sowohl eine zweistückige wie eine einstückige Ausführung der Steckverbinder 1,3 denkbar ist, oder einer oder beide Steckverbinder 1,3 direkt am Gehäuse 4 sitzen können. Weitere Bauweisen sind denkbar, jedoch ist die genaue Anordnung und Verkabelung für eine erfindungsgemäße Ausführung nicht von Bedeutung. Das Kabel 7c des Verbundnetzsteckverbinders 3 kann auch lösbar über einen Kleingerätesteckverbinder mit dem Gehäuse 4 verbunden sein, um die Wahl des Verbundnetzsteckverbinders 3 einer Länderspezifikation entsprechend anpassen zu können. Wird der Verbundnetzsteckverbinder 3 genutzt, liegt dort eine Wechselspannung von ungefähr 80V bis ungefähr 300V bei einer Frequenz von ungefähr 40Hz bis ungefähr 400Hz an. Bevorzugt beträgt die Wechselspannung von ungefähr 100V bis ungefähr 240V bei einer Frequenz von ungefähr 50Hz bis ungefähr 60Hz. Der Verbundnetzsteckverbinder 3, wie er in Fig. 2 dargestellt ist, kann vielfältige Geometrien aufweisen, die von den Länderspezifikationen abhängen. Grundsätzlich kann der Verbundnetzsteckverbinder 3 auch in Fahrzeugen genutzt werden, sofern diese über entsprechende Anschlüsse verfügen. Für die übrigen Anschlüsse mit den Steckverbindern 1 und 5 und das Gehäuse 4 gilt das Gleiche wie unter Fig. 1. Zum Umspannen der Wechselspannung auf eine Verbraucherspannung kann vorgegangen werden wie bei der Vorrichtung in Fig. 1, wobei die Wechselspannung dazu zuerst gleichgerichtet wird. Alternativ kann die Wechselspannung auch direkt an einen Transformator angelegt werden. An einer Verbraucherseite des Transformators wird die Verbrauchspannung in beiden Fällen abgenommen, gleichgerichtet und geglättet.

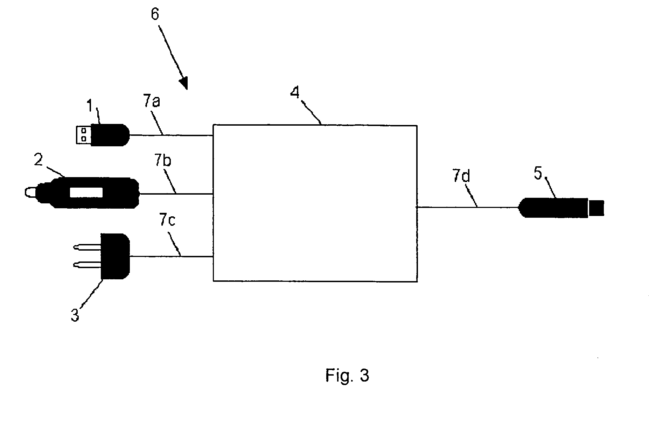

In Fig. 3 ist ein weiteres Ausführungsbeispiel einer Vorrichtung zur Energieversorgung elektrischer Kleingeräte 6 mit einem USB-Steckverbinder 1, einem Bordspannungssteckverbinder 2 und einem Verbundnetzsteckverbinder 3 an den Versorgungsanschlüssen und einem Kleingerätesteckverbinder 5 am Verbraucheranschluss. Für die Spezifikationen der Anschlüsse mit den Steckverbinder 1,2,3,5 und das Gehäuse 4 gilt das Gleiche wie unter Fig. 1 und Fig. 2 beschrieben. An den Versorgungsanschlüssen sind weitere Anschlüsse zusätzlich oder anstatt der dargestellten Anschlüsse mit entsprechenden Spezifikationen denkbar, wobei immer mindestens ein Anschluss einer USB-Spezifikation genügt.

Auch wenn diese Erfindung unter Bezeichnung verschiedener bestimmter Ausführungsformen beschrieben wurde, sind andere Ausführungsformen, die gewöhnlichen Fachmännern mit Blick auf die Veröffentlichung offenkundig sind, auch im Bereich dieser Erfindung. Entsprechend ist bestimmungsgemäß der Bereich der Erfindung nur durch Bezugnahme auf die angehängten Ansprüche definiert.

## Patentansprüche

1. Vorrichtung zur alternativen Energieversorgung elektrischer Kleingeräte mit elektrischer Energie verschiedener Versorgungssysteme, zum direkten Betrieb und/oder zur Ladung eines Akkumulators eines elektrischen Kleingerätes, wobei die Vorrichtung aufweist:
a) einen Verbraucheranschluss (5, 7d), zum Anschluss an das elektrische Kleingerät; und
b) mindestens zwei Versorgungsanschlüsse (1, 7a; 3, 7c), die einem ersten bzw. einem zweiten Versorgungssystem zugeordnet sind, wobei einer der Versorgungsanschlüsse als USB-Versorgungsanschluss (1, 7a) ausgebildet ist.

2. Vorrichtung nach Anspruch 1, wobei der Verbraucheranschluss ein Gleichspannungsanschluss ist und einen Kleingerätesteckverbinder (5) aufweist.

3. Vorrichtung nach Anspruch 1, welche mindestens einen Spannungswandler umfasst, der eine erste Spannung an mindestens einem der Versorgungsanschlüsse in eine zweite Spannung am Verbraucheranschluss umformt.

4. Vorrichtung nach einem der Ansprüche 1 bis 3, wobei mindestens einer der Versorgungsanschlüsse für ein Bordnetz in einem Fahrzeug ausgebildet ist und einen Bordspannungssteckverbinder (2) umfasst.

5. Vorrichtung nach Anspruch 4, wobei das Bordnetz ein 12V- bzw. 24V- Gleichspannungsnetz ist.

6. Vorrichtung nach Anspruch 4, wobei das Bordnetz ein Wechselspannungsnetz ist.

7. Vorrichtung nach einem der vorstehenden Ansprüche, wobei mindestens einer der Versorgungsanschlüsse für ein Verbundnetz mit Wechselspannung ausgebildet ist und einen Verbundnetzsteckverbinder (3) umfasst.

8. Vorrichtung nach einem der vorstehenden Ansprüche, wobei mehrere Versorgungsanschlüsse als USB-Versorgungsanschlüsse ausgebildet sind und jeweils mit USB-Steckverbindern verschiedener Typen ausgestaltet sind.

9. Vorrichtung nach einem der vorstehenden Ansprüche, wobei als Versorgungsanschlüsse zusätzlich zu mindestens einem USB-Anschluss mehrere verschiedene Anschlüsse mit entsprechenden Steckverbindern für unterschiedliche Versorgungssysteme vorhanden sind.
